Europäisches Patentamt

(19) European Patent Office

Office européen des brevets

(11) Publication number: **0 234 740**
**B1**

# EUROPEAN PATENT SPECIFICATION

(45) Date of publication of patent specification: **01.08.90**

(51) Int. Cl.⁵: **B 29 C 41/04, B 29 C 41/06**

(21) Application number: **87300678.7**

(22) Date of filing: **27.01.87**

(54) **Rotational molding machine.**

(30) Priority: **27.01.86 US 822800**

(43) Date of publication of application:
**02.09.87 Bulletin 87/36**

(45) Publication of the grant of the patent:
**01.08.90 Bulletin 90/31**

(84) Designated Contracting States:
**CH DE FR GB IT LI SE**

(56) References cited:
**AU-B- 40 520**
**DE-B-1 454 975**
**US-A-3 016 573**
**US-A-3 822 980**
**US-A-3 938 928**

**V.D.I. ZEITSCHRIFT, vol. 113, no. 11, August 1971, pages 873-878, Düsseldorf, DE; K. KRÖBL: "Das Herstellen nahtloser Formteile aus Kunststoffen durch Rotationsschmelzen"**

(73) Proprietor: **Friesen, Peter**
**R.R. No. 1 Box 314 Group 24**
**Winkler Manitoba R0G 2XO (CA)**

(72) Inventor: **Friesen, Peter**
**R.R. No. 1 Box 314 Group 24**
**Winkler Manitoba R0G 2XO (CA)**

(74) Representative: **Frost, Dennis Thomas et al**
**WITHERS & ROGERS 4 Dyer's Buildings Holborn London, EC1N 2JT (GB)**

## Description

The present invention relates to machines for molding plastics, and more particularly to rotational molding machines according to the preamble of claim 1 wherein the molding process is carried out within a heated oven, and the mold is rotated about two axes under controlled conditions.

Rotational molding machines are particularly adapted for the manufacture of large parts from vinyl plastisols. The particular materials which work well in conjunction with rotational molding machines include thermoplastic polyethylene powders, and particularly low density polyethylene. Other forms of thermoplastic powders which have been commercially used with rotational molding machines include low and high density polyethylene, polyethylene copolymers, cellulose acetate-butyrate, vinyl dry blends, impact styrenes, and high-modulate thermoplastics. These materials are introduced into a mold in either a heat convertible liquid or a powder, und the rotational molding process changes the physical form of the material to a continuous solid. This change occurs while the mold is rotationally moved about two perpendicular axes while being held within the machine.

A rotational molding machine may be adapted to hold one or a plurality of molds during the rotational molding process, the molds being held into the machine by a frame work called a spider. A two-axis drive is imparted to the spider to cause the necessary rotational movement during the process.

Conventionally, rotational molding is carried out in a machine or system in which there is provided initially a first heating location of the system in which the mold is introduced into the heating portion and heated and rotated to provide the molding action. Subsequently the mold is moved to a second location separate from the first location in which the mold is cooled to complete the curing process. The mold is then unloaded and reloaded either at the cooling station or at a third location. Many machines which are specifically designed are of the turret type in which there are generally three stations. One example of a device of this type is shown in Australian Application 40520 (Orme) in which the molds are mounted upon arms which move through steps of 120°C from three separate stations. Machines of this type are generally very large since they must provide basically three times the volume necessary for containing the molds and generally a much larger volume in view of the movement from one station to the next. The machines therefore tend to be very expensive and very large or in the smaller sizes are of course limited to small size molds.

One example of a specific molding chamber or oven is shown in U.S. Patent 3,016,573 (Blue). This patent merely shows a specific construction of oven in which the molds are mounted for rotation and heating. There is no suggestion that the whole molding process should be carried out in this oven; the design of the chamber is very limited in that it provides very limited access to the interior for introducing large molds and for loading these large molds. In addition the cooling effect which could be obtained in the enclosed chamber would be very limited and would involve an extended period of time.

U.S. Patent 3,938,928 (Andrews), upon which the preamble of Claim 1 is based, proposes an arrangement in which both heating and cooling of the mold are carried out in a single chamber. The device therefore provides basically a cylindrical chamber with the axis horizontal with the molds being rotated basically about the centre axis of the chamber. The patent is particularly concerned with a cooling system in which moist air is injected into the chamber while the chamber remains closed and the moist air, steam and heat are extracted through an extraction duct. The device uses electric heating mounted in the front and rear walls of the chamber.

Again the access to this chamber is very limited and loading and unloading of the molds is hardly discussed at all. Furthermore the cooling effect by injection of air into a closed chamber even though the air may be moistened is very limited and the device is therefore ineffective and has not achieved significant commercial success.

Andrews therefore provides an arrangement including the following features:

A rotational molding machine for use in rotational molding of the type for receiving and processing a mold in a first step in which the mold is loaded with a plastics material to be molded, in a second step in which the mold is rotated while it is heated, a third step in which the mold is rotated while it is cooled, and a fourth step in which the mold is unloaded, the machine comprising an enclosed housing (10, 12) defining therein a single chamber, said housing including a base (12) having a base member arranged to rest upon the ground such that the housing is maintained by the base member in a fixed position on the ground surface, a base front wall (31), a base rear wall and base side walls, each of said base walls being fixed to the base member so as to be generally upstanding from the base member to an upper edge of the respective base wall, an upper cover member (10) including a top, a cover front wall, a cover rear wall and cover side walls, each of the cover walls being generally depending from said top to a lower edge of the respective cover wall, said cover member being arranged such that the base walls and the cover walls meet at said upper and lower edges respectively thereof to define said single interior chamber for receiving said mold.

It is one object of the present invention therefore to provide an improved rotational molding machine of the single chamber type in which both the heating and cooling take place within the single chamber and yet there is provided effective access for loading and unloading and also there is provided effective opening of the chamber for a rapid cooling effect.

The present invention is therefore characterized in that the front base wall includes at least a portion thereof which is pivotally mounted relative to the base member for movement into an open position to allow access into said base of an operative and to a closed position to fully close said base, in that said upper cover member (10) is movably mounted relative to said base so as to be moveable separately from said front base wall from a closed position thereof closing said single interior chamber to an open position in which the cover member is spaced from upper edges of said base walls to allow direct vertical access to said base, in that there is provided means (52) mounting said support member (32) such that the support member extends across the upper edges of said base side walls such that the lower edges of said cover side walls can cover said support member when said cover member is in the closed position, and in that said duct means (16, 18, 18a) includes a first duct portion (16) to direct air from said fan means into said housing, a second duct portion (18) arranged to withdraw air from said housing for recirculation to said fan means and a third duct portion (18a) arranged to draw exterior air for directing cooling air through said fan means to said housing and means (18a, 18b) for selecting for connection to said fan means one of said second and third duct means.

The arrangement by which the upper cover and the front base wall can be opened allows proper access to the mold so that the mold can be lifted out, filled and replaced without difficulty while allowing a mold which is substantially the maximum size which can be received within the chamber to be used. The opening of the cover so it allows a direct vertical access to the base allows heat to rise away from the mold in a vertical direction thus allowing proper cooling effect. The arrangement by which the movement of air can be selected either from a recirculation position or from a position which causes fresh cooled air to be pumped into the system also operate to provide effective cooling of the mold while it remains in the chamber. The cover arrangement cooperates with the support for the mold so that the mold projects inward over the sides at a position where the mold support can be covered by the cover member as it closes. These features therefore cooperate to provide a rotational molding device which operates to allow the whole molding process to take place effectively within the single chamber to provide a simple, inexpensive, small size machine which can accomodate, due to its design effectively the maximum size mold and molded part.

The foregoing and other objects and advantages will become apparent from the following specification and claims, and with reference to the appended drawings, in which:

Figure 1 shows an isometric front view of the invention; and

Figure 2 shows a front elevation view with the clam shell cover and doors open; and

Figure 3 shows an isometric rear view of the clam shell cover; and

Figure 4 shows a portion of the spindle arm and bearing assembly; and

Figure 5 shows an end view of the motor drive mechanism; and

Figure 6 shows a cross section view taken along the lines 6—6 of Figure 1; and

Figure 7 shows an isometric view of a panel section; and

Figure 8 shows a further partial cross section and isometric view of the oven panels; and

Figure 9 shows a partial view taken along the lines 9—9 of Figure 5; and

Figure 10 shows a front view of an alternative form of the invention; and

Figure 11 is an isometric view of an improved spindle arm according to the invention; and

Figure 12 is a longitudinal cross-sectional view of the spindle arm of Figure 11.

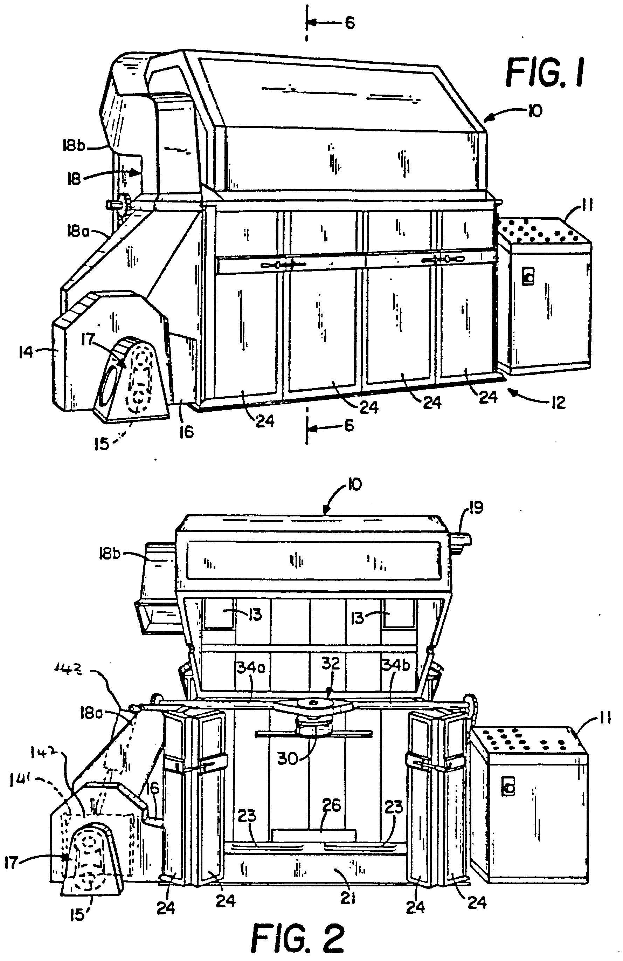

Referring first to Figure 1, the invention is shown in front isometric view. A lower housing 12 supports a clam shell cover 10 which is pivotally attached thereto, and an oven is formed by the enclosure within lower housing 12 and clam shell cover 10. A plurality of doors 24 are openable to provide interior access to the oven. A blower 14 provides air circulation via lower duct 16 and upper duct 18. Blower 14 is driven by a motor 15, through drive connection 17. Lower duct 16 is fixedly attached to lower housing 12, and upper duct 18 has a section 18a fixedly attached to lower housing 12, and a section 18b fixedly attached to clam shell cover 10. A control panel 11 is mounted in a cabinet and is connected to the various driven members and sensors to be hereinafter described, to control the operation of the invention.

Figure 2 shows the invention of Figure 1 with clam shell cover 10 in its open position, and doors 24 hinged to their open positions. A gas burner is mounted to the rear outside wall of lower housing 12, and a burner opening 26 is formed through the lower rear section of the oven. When clam shell cover 10 is in its raised position the upper duct section 18b separates from lower duct section 18a, thereby disconnecting the air recirculation system from blower 14. Blower 14 has a lower duct 16 which is coupled into the side of lower housing 12. Duct 16 opens into a plenum 21 which extends across the lower front section of the floor of the interior oven. Plenum 21 has a plurality of vents 23 for directing the flow of blower 14 air upwardly toward the center volume of the oven. The interior walls of the clam shell cover 10 have a plurality of duct openings 13, for receiving air flow, which are coupled in flow communication to upper duct section 18b. When the clam shell cover 10 is in its closed position the air flow passes from upper duct section 18b, through lower duct section 18a, to a return opening into blower 14. In this manner, a complete closed recirculation air flow path is developed through the oven for maintaining uniform heat and eliminating hot spots. When clam shell door 10 is open the circulation air system is broken, and blower 14 then serves to provide a source of cooling air into the oven through vents 23. Cooling air is drawn into the fan 14 through an opening 141 (Figure 2) in a rear wall of the fan housing. Normally the opening 141 is closed by a corer 142 which can be opened automatically by an actuator 143 on opening of the clam shell upper cover member 10. The dimension of the opening 142 is signficiantly greater than that of the duct 18 so that the latter acts to throttle the fan 14. In this way the single fan can run at low horsepower during the circulation cycle drawing sufficient air for recirculation and can increase power when cooling is required automatically by opening of the cover 142. An exhaust duct 19 is located on the side of clam shell cover 10, and opens into the interior of the oven.

A spider 32 is suspended inside the oven between a left spindle arm 34a and a right spindle arm 34b. Left and right spindle arms 34a and 34b are supported in a manner to be hereinafter described. Spider 32 has a fixture holder 36 attached thereto, for purposes of providing an attachment means for one or more molds. Fixture holder 36 is rotatable about two axes, as will be hereinafter described.

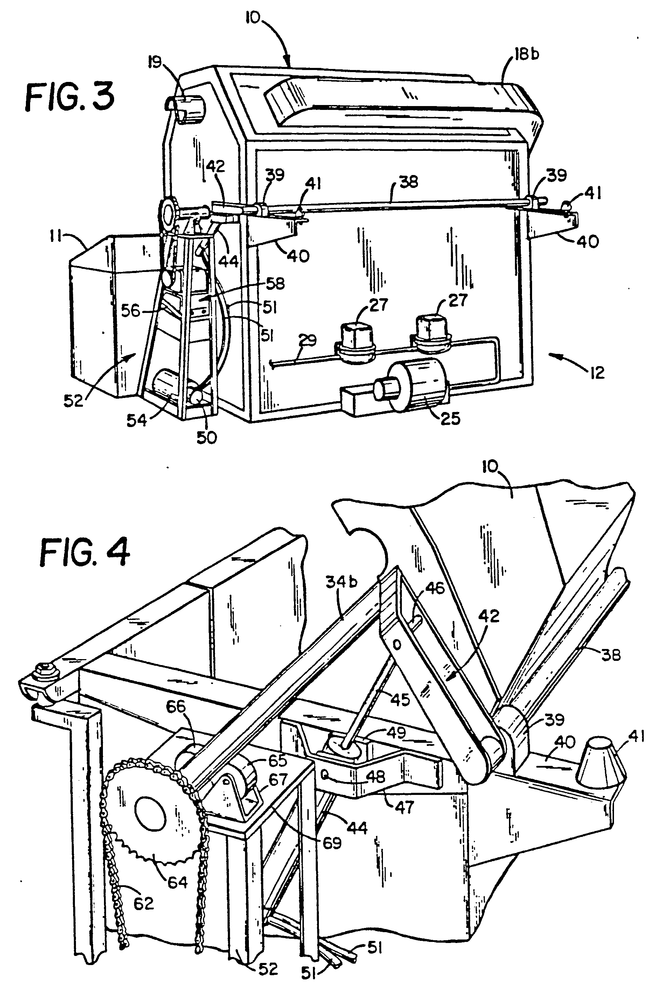

Figure 3 shows a rear isometric view of the apparatus, with the clam shell cover 10 in a closed position. Upper duct section 18b extends across the rear portion of clam shell cover 10, coupling into vent openings 13 through the wall of clam shell cover 10. A gas burner 25 is mounted proximate the lower rear portion of lower housing 12, and is connected through suitable regulators 27 and a gas line 29 to a source of combustible gas. Gas burners 25 operates through a burner opening 26 to the interior of the oven.

Clam shell cover 10 is pivotally hinged about a bar 38, which extends across the rear side of clam shell cover 10 and passes through a pair of journal bearings 39, one journal bearing 39 being affixed via a bracket 40 to either side of lower housing 12. A pair of rubber stops 41 are attached to brackets 40, and serve to limit the pivotal motion of clam shell cover 10. A linkage 42 is fixedly attached to each end of bar 38, as is illustrated in Figure 3 and in Figure 4. Linkage 42 is also fixedly attached to the side of clam shell cover 10. Pivotal motion of linkage 42 about its hinge point connection to bar 38 causes a corresponding pivotal motion of clam shell cover 10. Linkage 42 is connected to a hydraulically operated cylinder 44 through piston rod 45 which is connected to a cross pin 46, which pivotally attached to linkage 42 through suitable openings. Hydraulic cylinder 44 is itself pivotally attached to a bracket 47 by means of a pin 48 which is attached to hydraulic cylinder 44, and which passes into openings in bracket 47 and corresponding openings in a further bracket 49 attached to the side wall of lower housing 12. A pair of hydraulic hoses 51 couple hydraulic oil between hydraulic cylinder 44 and a hydraulic pump 50. Hydraulic pump 50 is mounted at the base of a carriage 52 which is positioned outside of lower housing 12. Hydraulic pump 50 is driven by a suitable electric motor 54.

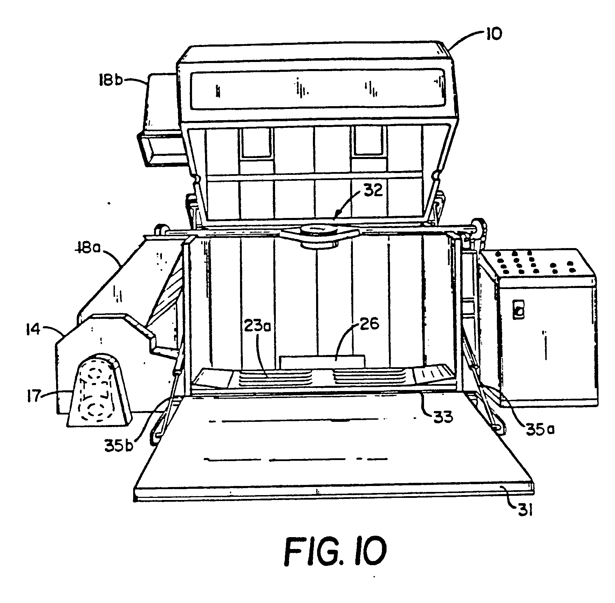

Carriage 52 has an inclined plane 56 attached thereto, for the mounting of a motor drive assembly 58. Reference should be made to Figures 3, 4 and 5 for illustrative purposes. Motor drive assembly 58 comprises a mounting bracket 59 which is slidably mounted to inclined plane 56, and a motor drive 60 which is affixed to bracket 59. Drive motor 60 has a drive sprocket 61 attached thereto, for coupling to drive chain 62. Drive chain 62 is further coupled to a driven sprocket 64 which is affixed to the end of right spindle arm 34b. Reference should also be made to Figure 9, which illustrates the slidable freedom between motor mount 59 and inclined plane 56. A plurality of slots in inclined plane 56 permit the selective adjustment of bolts interconnecting bracket 59 to inclined plane 56.

Driven sprocket 64 is rigidly affixed to right spindle arm 34b, and right spindle arm 34b is supported on a pair of rollers 65 and 66. Roller 65 is rotatably mounted to a roller mount 67, which is fixedly attached to a plate 69. Similarly, roller 66 is rotatably mounted to a roller mount 68 which is fixedly attached to plate 9. Rollers 65 and 66 provide mounting support for right spindle arm 34b, while permitting free rotation thereof.

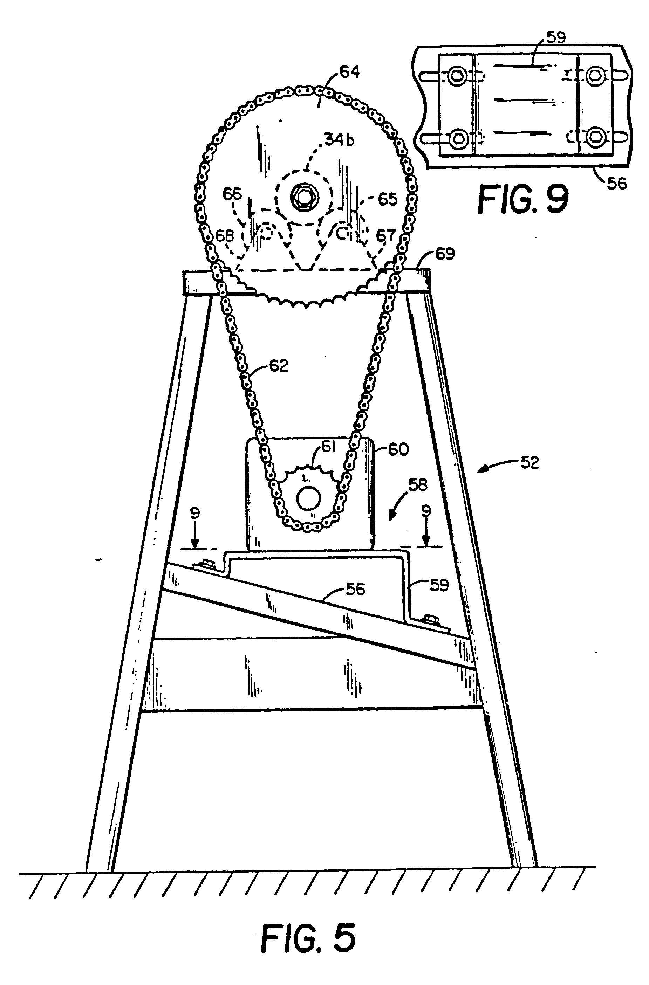

An assembly similar to that shown in Figure 5 is also found on the left side of lower housing 12, including a carriage 52, motor drive assembly 58, drive chain 62 and driven sprocket 64, rollers 65 and 66 and their associated mounting, but which differs in construction only in the details of the connection of driven sprocket 64 to its corresponding rotatable member. On the left side of lower housing 12 the driven sprocket 64, or its equivalent, is affixed to an interior shaft which passes through left spindle arm 34a to a geared connection inside of spider 32. Spindle arm 34a is rigidly affixed to spider 32, and rotated therewith. The rotatable supporting mechanism for spindle arm 34a functions as described above in connection with spindle arm 34b.

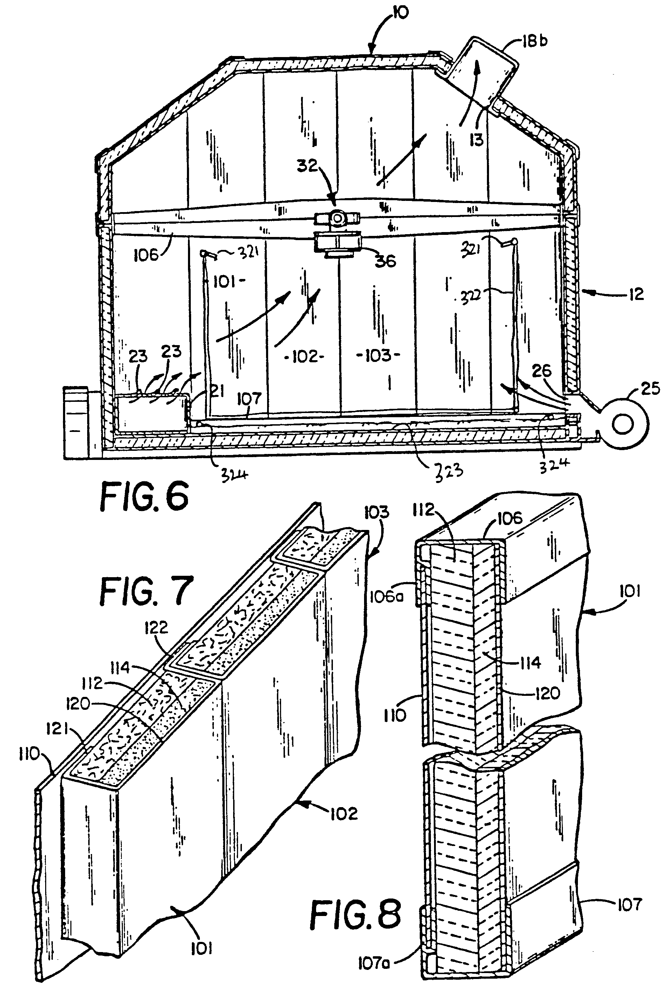

Figure 6 shows a right side elevation view of the oven, in partial cross section to illustrate the oven insulation panels and air flow circulation system. Gas burner 25 emits a heating flame through opening 26 in the rear side of lower housing 12. The flame of gas burner 25 serves to provide the heat source for the oven, necessary to the rotational molding process. At the same time, blower 14 moves a volume of air through plenum 21 and vent openings 23. Vent openings 23 include deflectors for directing the air volume generally as indicated by the arrows in Figure 6. Air flow is forced through the oven and past spider 32 so as to maintain a continuous supply of heated air over all portions of spider 32 and the molds which may be attached to fixture holder 36. Air flow continues upwardly and exits the oven through vents 13 and upper duct section 18b. The air is then returned to blower 14 in a manner described hereinbefore, and is recirculated through the oven. At the same time that air flow passes through the oven in the manner indicated, spider 32 is rotated about two mutually perpendicular axes. A first axis of rotation is aligned with spindle arms 34a and 34b, and a second axis of rotation is normal thereto. This enables all sides of the mold attached to fixture holder 36 to become equally exposed to a continuous flow of heated air during the rotational molding process.

In Figure 6 there is shown an arrangement for cooling the molds subsequent to the heating process. This comprises a pair of water jet nozzles 321 which are arranged to direct water from a pipe system 322 onto the molds to assist cooling. As shown there are two such nozzles but it will be appreciated that further nozzles may be provided depending upon the size of the nozzle and the amount of water required so that the nozzles are shown mounted inside the oven on the suitable pipe work 322 but it will be appreciated that nozzles could be mounted outside the oven and arranged to project over the upper rim 106 when the upper cover member or clam shell is opened.

At the base of the oven is provided a water pan 323 at which the water from the nozzles 321 is collected. Drains 324 are provided at suitable locations around the periphery of the water pan to allow the escape of the water to a suitable drainage system (not shown) with the drains 324 mounted above the lower most level of the water pan 323 so as to retain a proportion of the water within the pan 323 up to a predetermined depth. The retained water is thus present in the oven when the heating cycle commences and acts to evaporate thus increasing the humidity within the oven and the transfer of heat from the hot air within the oven to the molds. It has been found that the presence of water layer in the pan 323 significantly increases the efficiency of the heating system so that heat can be taken up more quickly and less heat is lost thus improving the efficiency of the process.

The entire outer periphery comprising clam shell cover 10 and lower housing 12 is formed from a plurality of panels. The panels are held between rigid channels, but no physical connection is made between the panels and the channels in which they are recessed. The panels are free to move in response to thermal expansion and contraction forces, but any such movement is guided within the channels in which the panels are mounted. A partially expanded view in cross section is shown in Figures 7 and 8, illustrating both the construction of the panels and the containment of the panels within channels which form a part of clam shell cover 10 and lower housing 12. For exemplary purposes a more detailed description of several of such panels will be made herein, it being understood that, the general constructional features apply to all of the panels forming a part of the oven.

Panels 101, 102 and 103 are typical of the construction of all of the panels in the apparatus. These panels are each held between an upper channel 106 and a lower channel 107. Channel 106 and channel 107 are each constructed in the form of U-channels, having their respective openings facing toward one another. Each of these openings constrain the upper and lower portions respectively of the panels held therebetween. Figure 8 shows the constructional relationship between U-channels 101 and 107, and with reference to panel 101. An outer metal sheet 110 serves as a common exterior wall to all of the panel assemblies. Outer metal sheet 110 is constrained between U-channels 106 and 107, within respective slots 106a and 107a. A layer of insulation 112 is confined inside of panel 110, insulation layer 112 being formed of fiberglass or similar insulation material. A further insulation layer 114 is adjacent the inside of layer 112. Insulation layer 114 is preferably constructed from high temperature insulation material, capable of withstanding temperatures of approximately 649°C (1,200°F). An inner panel sheet 120 forms the inside wall of panel 101, and may be formed of material such as sheet metal. Inner sheet 120 is shaped as illustrated in Figure 7, having an exterior tab portion 121 for confining insulation layers 112 and 114, and having a generally rectangular portion for partially surrounding the three sides of insulation layers 112 and 114, and having an outwardly extending tab 122 for engaging and interlocking against an adjacent panel 102. In this manner of construction, each panel is contained between an upper and lower U-channel member, and is further interlocked against its adjacent panel by means of the shaping of inner sheet 120.

Figure 10 shows an alternative form of the invention, utilizing a different approach for frontal access to the machine. The clam shell cover 10 is pivotally attached as has been described hereinbefore, and the upper and lower ducts 18b and 18a respectively are similarly connected. The gas burner opening 26 is positioned at the lower rear of the rear wall of the machine, and an air vent 23a is located in the floor of the machine proximate the front. A hingeable door 31 is provided, having a hinged mounting 33 adjacent the front edge of the floor of the machine. Door 31 is therefore pivotally hinged to move from an upper position wherein it encloses the oven portion of the machine, to a lower horizontal position for ease of access. Door 31 may be raised and lowered through the activation of cylinders 35a and 35b, which may be air-type cylinders or hydraulic cylinders. The embodiment of Figure 10 has the advantage of providing a bigger access opening, and to some extent permits more rapid cooling of the oven when door 31 is swung to its open position.

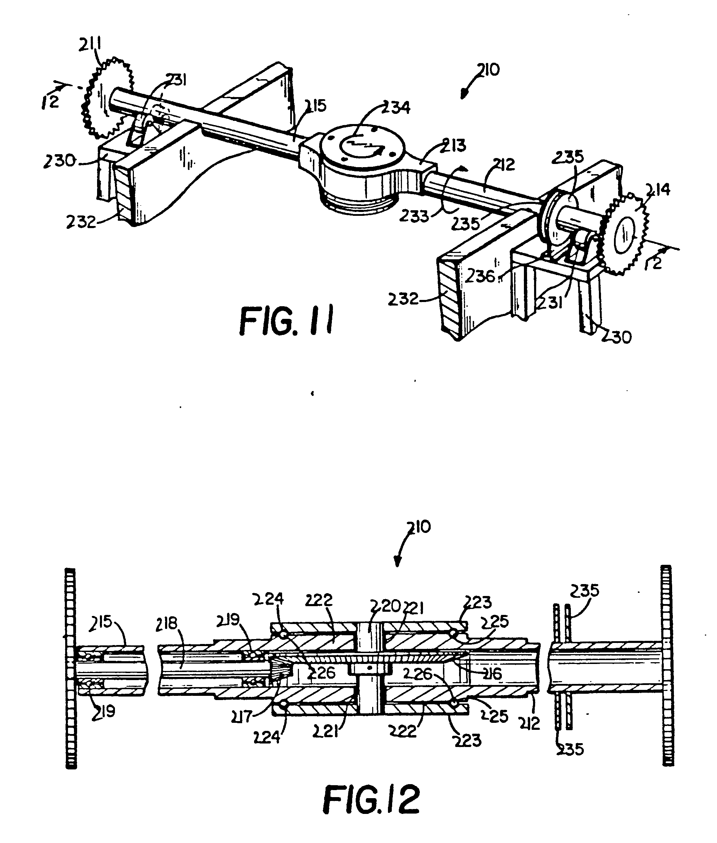

Referring now to Figures 11 and 12 the spindle arm of the present invention is shown in more detail and is generally designated 210. Spindle

arm 210 consists of cylindrical fixed shaft 212 which may be solid or tubular, attached to gear housing 213 and having sprocket 214 attached to its opposite end. Spindle arm 210 also includes cylindrical and tubular pinion housing 215 attached on one end to gear housing 213 opposite the point of attachment of fixed shaft 212, and housing 215 is preferably of the same outside diameter as fixed shaft 212. Gear housing 213 encloses bevel gear 216 and pinion gear 217. Pinion shaft 218 is located within pinion housing 215. Pinion shaft 218 is rotatably mounted within housing 215 on bearings 219, and is connected on one end to pinion gear 217 and on its opposite end to pinion drive sprocket 211. Bevel gear 216 is attahed to spindle axle 220. Axle 220 passes through the center of bevel gear 216 and through holes 221 located in gear housing 213. The exterior surface of gear housing 213 includes two opposite facing flat bearing surfaces 222. Bearing plates 223 are attached to opposite ends of axle 220, each in close proximity to a bearing surface 222. Each bearing plate 223 has a circular bearing plate groove 24 around its perimeter which groove 224 cooperates with a similar bearing surface groove 225 in each bearing surface 222, thereby forming a bearing track for location therein of ball bearings 226. Bearings 226 provide for essentially frictionless load bearing support of plates 223. The spider framework containing the plastic molds may be respectively attached to bearing plates 223.

Spindle arm 210 includes thrust plates 235, preferably attached to fixed shaft 212. An intermediate flange 236 may be located on support 230 to fit between thrust plates 235 when spindle arm 210 is in position on the molding machine. Intermediate plate 236 thereby prevents movement of spindle arm 210 in the longitudinal direction of fixed shaft 212 when spindle arm 210 is actuated.

The basic operation of the device can now be appreciated by reference to Figure 1 wherein spindle arm 210 is located on supports 230. Supports 230 include casters 231 for releasable rotational support of spindle arm 210, wherein the opposing cylindrical surfaces of fixed shaft 212 and housing 215 provide for smooth rotational cooperation with casters 231. Sides 232 are a diagrammatic representation of a portion of the oven sides of a rotational molding machine wherein gear housing 210 is located within the oven. Rotation of fixed shaft sprocket 214 will rotate gear housing 213 about the axis of shaft 212, which axis is perpendicular to axle 220. Rotation of pinion drive sprocket 211 will rotate axle 220, and hence bearing plates 223, to which bearing plates are attached the spider framework containing the plastic molds about an axis of rotation is perpendicular to shaft 212. The combination of each axis of rotation thereby provides the two orthogonal axes of rotation needed in a rotational molding process.

In operation, and before the oven is fired up and the air circulation system is activated, the clam shell cover 10 is opened to expose the oven interior, and the doors 24 are opened to permit access into the oven. A spider 32, including left and right spindle arms 34a and 34b, and including fixture holder 36, and also including one or more molds attached to fixture holder 36, are lifted into the oven and lowered into position on respective roller pairs 65 and 66. The right and left side drive chains are connected about the respective drive sprockets, and the drive motor is positioned along inclined plane 56 to permit connection of the drive chains to the respective drive motors. The drive motors are then positioned along the inclined plane so as to create a predetermined chain tension for driving purposes, and the motgrs are fixedly attached to the inclined plane on either side of the oven. Next, the front doors are closed and the clam shell cover is closed, and the air circulation system and burner is actuated. The respective drive motors are turned on to impart rotational motion to spider 32 in two orthogonal directions. The righthand drive sprocket causes spider 32 to rotate about an axis aligned with left and right spindle arms 34a and 34b. The lefthand drive sprocket causes rotational motion of fixture holder 36 about an axis normal to the first axis, thereby causing the mold or molds attached to the fixture holder 36 to receive two-axis rotation. The respective rotation rates of the two axes are controlled by the controls on control panel 11, which permit regulation of the motor drive voltages. Control panel 11 also includes controls for setting the interior oven temperature, the air circulation system, and a timer for setting the operational cycle of the oven.

After the heating cycle is complete following a predetermined period of time which can be varied in dependence upon the materials to be processed, the heating system or burner can be turned off leaving the oven closed and effectively remaining at a constant temperature to hold the molds at that temperature for a curing period. This period within the oven without the application of heat can again reduce the amount of heat necessary for a particular part and thus improves the efficiency of the system in terms of heat usage.

After the curing is complete, the upper cover member or clam shell is opened and the front doors retained closed. This opening allows heat to escape upwardly by convection from the mold and at the same time automatically hauls the recirculation of air due to the movement and separation of the duct 18. In addition the opening 141 in Figure 2 is uncovered to allow cooling air to be drawn into the fan. The size of the opening 141 is such that the fan can draw as much air as it can propel so that the fan is unthrottled by the opening and thus using maximum power. The duct 18 is of a smaller dimension thus throttling the fan and automatically reducing the amount of power and the amount of air in the recirculation cycle. The actuator 143 automatically opens upon opening of the clam shell cover.

After the cooling cycle is complete, the front door forming the front wall is opened to allow access to the mold for opening and removal of the completed part.

The operation described above may be repeated for so long as a particular set of molds are needed for the manufacture of the molded parts. Another feature and advantage of the invention is that it facilitates, in certain cases, the quick changing of the entire arm, spider and mold assembly from the oven from one manufacturing run to the next manufacturing run. For example, the arm described herein may be replaced by an offset arm for handling molds of different and larger configurations than are possible with spider 32. To accomplish the quick change of the entire assembly, the sprocket chains are loosened and disconnected from the driven sprockets, and the entire assembly including spider 32 is lifted from the oven to a separate station for removing the material from the molds. A new spider and associated apparatus may immediately be inserted into the oven to begin a new molding process, even before the previous spider has been cooled and the molds broken to obtain the molded parts. In this manner, the oven may be used more or less continuously, with only brief intervals required for removal and replacement of the spider and mold assemblies.

In an alternative arrangement (not shown) the upper cover member 10 can be mounted for sliding movement rearwardly of the lower oven portion. In this case a front portion or front wall of the upper cover member can firstly pivot upwardly to open the front of the upper cover portion so that it can slide rearwardly and clear the mold within the oven. The upper cover portion in such an arrangement can move on rollers which are eccentrically mounted so that a first movement lifts the upper cover portion slightly away from the lower oven portion following which the cover can slide rearwardly onto a frame structure rearwardly of the lower oven portion. This action also breaks the duct 18 in the same manner as previously explained.

In a yet further alternative arrangement (not shown) the upper cover member can pivot about an axis spaced downwardly of the upper edge of the lower oven portion so that the majority of the rear wall forming the oven is part of the upper cover member. This can be used in an arrangement where the height of the area in which the machine is to be placed is not sufficiently high to allow full pivotal movement of the machine as shown in Figure 1 in which case the lower pivot axis reduces the maximum height to which the upper cover member reaches.

## Claims

1. A rotational molding machine for use in rotational molding of the type for receiving and processing a mold in a first step in which the mold is loaded with a plastics material to be molded, in a second step in which the mold is rotated while it is heated, a third step in which the mold is rotated while it is cooled, and a fourth step in which the mold is unloaded, the machine comprising an enclosed housing (10, 12) defining therein a single chamber, said housing including a base (12) having a base member arranged to rest upon the ground such that the housing is maintained by the base member in a fixed position on the ground surface, a base front wall (31), a base rear wall and base side walls, each of said base walls being fixed to the base member so as to be generally upstanding from the base member to an upper edge of the respective base wall, an upper cover member (10) including a top, a cover front wall, a cover rear wall and cover side walls, each of the cover walls being generally depending from said top to a lower edge of the respective cover wall, said cover member being arranged such that the base walls and the cover walls meet at said upper and lower edges respectively thereof to define said single interior chamber for receiving said mold, a mold support member (32) for supporting and driving said mold about two orthogonal axes, said support member (32) being arranged to extend from one base side wall to the other base side wall, heating means (26) for supplying heat into said housing at a position exteriorly of said mold, fan means (14) and duct means (16, 18, 18a) connected to said fan means for directing air into said chamber characterized in that the front base wall includes at least a position thereof which is pivotally mounted relative to the base member for movement into an open position to allow access into said base of an operative and to a closed position to fully close said base, in that said upper cover member (10) is movably mounted relative to said base so as to be moveable separately from said front base wall from a closed position thereof closing said single interior chamber to an open position in which the cover member is spaced from upper edges of said base walls to allow direct vertical access to said base, in that there is provided means (52) mounting said support member (32) such that the support member extends across the upper edges of said base side walls such that the lower edges of said cover side walls can cover said support member when said cover member is in the closed position, and in that said duct means (16, 18, 18a) includes a first duct portion (16) to direct air from said fan means (14) into said housing, a second duct portion (18) arranged to withdraw air from said housing for recirculation to said fan means and a third duct portion (18a) arranged to draw exterior air for directing cooling air through said fan means to said housing and means (18a, 18b) for selecting for connection to said fan means one of said second and third duct means.

2. The machine according to Claim 1 wherein the front base wall (31) is pivotal about a horizontal axis (33) adjacent the base member.

3. The machine according to Claim 1 or 2 including means (18a, 18b) responsive to movement of said cover member (10) into an open position thereof, said responsive means being arranged to actuate said selecting means so as to select said third duct means to direct cooling air into said base member.

4. The machine according to Claim 1, 2 or 3 wherein said first portion (16) is attached to said base member for directing said air into said housing through said base member, wherein said second portion (18) is attached to and carried by said cover member (10) and wherein movement of said cover member from said closed position thereof to an open position thereof automatically disconnects said second portion (18) from said fan means (14) so as to halt recirculation of air through said fan means and to select the direction of air cooling air through said fan means to said housing.

5. The machine according to any preceding Claim wherein said cover member is mounted on said base for pivotal movement relative thereto about a horizontal axis at said rear base wall.

6. The machine according to any preceding Claim wherein said housing comprises a U-channel support frame, (106, 107) and a plurality of multi-layer panels (101, 102, 103) held in said U-channel support frame, wherein said multi-layer panels each further comprises an outer metal sheet (110) and an inner metal sheet (120) and a plurality of layers (112, 114) of insulating material compressed therebetween wherein said inner metal sheet (120) comprises bends to form three sides of a rectangle and an outward bend for interlocking with an adjacent panel, and wherein said plurality of layers of insulating material further comprising an inner layer of high temperature insulation material capable of withstanding a temperature of 649°C (1200°F).

7. The machine according to any preceding Claim wherein said means mounting said support member comprises a motor carriage (52) mounted outside of and adjacent said base side walls, said motor carriage having means for mounting a drive motor.

8. The machine according to Claim 7 wherein said motor carriage each further comprises a platform for supporting a pair of spaced rollers (65, 66) arranged to rotatably support said support member (32), said platform being positioned approximate the upper edge of said base side wall.

9. The machine according to any preceding Claim including water spray means (321) for spraying water onto said mold during said third step and a water collection pan (323) at a base of the housing arranged to collect at least some of the water sprayed during the third step for evaporation during the second step of a next cycle.

10. The machine according to any preceding Claim wherein said fan means (14) includes duct means (18) communicating with a recirculation opening (141) communicating with the interior of the housing for withdrawing air from the housing for recirculation in said second step, a cooling opening in said duct means adjacent said fan (14) for allowing cool air into said fan from exteriorly of said housing and movable means (142) for opening and closing said cooling opening, and wherein said duct means (18) is arranged to throttle said fan and wherein said cooling opening (147) is greater in cross-sectional area than said duct means (18) to reduce the throttling of the fan and increase the air flow of cool air, and including means (143) automatically actuable on opening of said door means for operating said movable means to allow entry of said cool air.

11. The machine according to any preceding Claim wherein said mold support member comprises

(a) a gear housing having an input drive gear means (214) and an output drive gear means (216), for orthogonally translating rotational motion of said input drive gear means to said output drive gear means;

(b) a cylindrical shaft (212) lying along an axis and having a first end attached to said gear housing (213) and a length greater than approximately one-half the distance between the walls of said rotational molding machine, and having a second end with a rotational drive means (214) attached thereto, for receiving a rotational drive coupling from a driving source;

(c) a hollow cylindrical housing (215) lying along said axis and having a first end attached to said gear housing (213) and a length greater than approximately one-half the distance between the walls of said rotational molding machine, said cylindrical housing being oppositely positioned from said cylindrical shaft (212) relative to said gear housing.

(d) a driving shaft (218) in said hollow cylindrical housing and having a first end connected to said input drive gear means and a second end projecting from said cylindrical housing and having a rotational drive means (211) attached thereto for receiving rotational drive coupling from a driving source;

(e) a driven shaft (220) connected to said output drive gear means and projecting externally of said gear housing; and

(f) means (235) for limiting axial movement of said cylindrical shaft, said hollow cylindrical housing and said gear housing.

**Patentansprüche**

1. Rotationsformmaschine zur Verwendung bei der Rotationsformgebung des Typs, bei dem eine Form in einem ersten Schritt, in dem die Form mit einem zu formenden Kunststoffmaterial beschickt wird, in einem zweiten Schritt, in dem die Form unter gleichzeitiger Erwärmung gedreht wird, einem dritten Schritt, in dem die Form unter gleichzeitiger Abkühlung gedreht wird, und einem vierten Schritt, in dem die Form entleert wird, aufgenommen und bearbeitet wird, wobei die Maschine ein Umschließungsgehäuse (10, 12) aufweist, in dem eine einzige Kammer gebildet wird, das Gehäuse eine Basis (12) aufweist, welche ein Basisteil hat, das derart ausgelegt ist, daß es auf dem Untergrund derart aufliegt, daß das Gehäuse durch das Basisteil in einer festen Position auf der Untergrundfläche gehalten ist, ferner eine Basisvorderwand (31), eine Basisrückwand und Basisseitenwände aufweist, wobei jede der Basiswände fest mit dem Basisteil derart verbunden ist, daß sie jeweils im allgemeinen aufrecht von dem Basisteil zu einem oberen Rand der zugeordneten Basiswand steht, ferner ein oberes Abdeckteil (10) aufweist, das ein Oberteil, eine Abdeckvorderwand, eine Abdeckrückwand und Abdeckseitenwände umfaßt, wobei jede Abdeckwand im allgemeinen von dem Oberteil zu einem unteren Rand der zugeordneten Abdeckwand hängend angeordnet ist und wobei das Abdeckteil derart ausgelegt ist, daß die Basiswände und die Abdeckwände an den oberen und unteren Ränder jeweils aneinanderstoßen, um die einzige Innenkammer zur Aufnahme der Form zu bilden, ein Formtragteil (32) zum Tragen und Antreiben der Form um zwei orthogonale Achsen aufweist, wobei das Tragteil (32) derart beschaffen und ausgelegt ist, daß es sich von einer Basisseitenwand zu der anderen Basisseitenwand erstreckt, eine Heizeinrichtung (26) aufweist, welche Wärme in das Gehäuse an einer Stelle außerhalb der Form einbringt, eine Gebläseeinrichtung (14) und Leitungseinrichtungen (16, 18, 18a) aufweist, die mit der Gebläseeinrichtung verbunden sind, um Luft in die Kammer zu lenken, dadurch gekennzeichnet, daß die vordere Basiswand wenigstens einen Abschnitt aufweist, der schwenkbeweglich relativ zu dem Basisteil zur Bewegung in eine Offenstellung angebracht ist, um einen Zugang für eine Bedienungsperson zu der Basis zu ermöglichen, und zur Bewegung in eine Schließstellung, in der die Basis vollständig geschlossen ist, daß das obere Abdeckteil (10) relativ zur Basis derart beweglich angebracht ist, daß es gesondert von der vorderen Basiswand von einer Schließstellung, in der die einzige Innenkammer geschlossen ist, zu einer Offenstellung bewegbar ist, in der das Abdeckteil einen Abstand von den oberen Rändern der Basiswand hat, um einen direkten vertikalen Zugang zu der Basis zu haben, daß eine Einrichtung (52) vorgesehen ist, welche das Tragteil (32) derart lagert, daß das Tragteil sich über die oberen Ränder der Basisseitenwände derart erstreckt, daß die unteren Ränder der Abdeckseitenwände das Tragteil abdecken können, wenn das Abdeckteil in der Schließstellung ist, und daß die Leitungseinrichtungen (16, 18, 18a) einen ersten Leitungsabschnitt (16), mittels welchem Luft von der Gebläseeinrichtung (14) in das Gehäuse gelenkt wird, einen zweiten Leitungsabschnitt (18), der derart ausgelegt ist, daß Luft von dem Gehäuse zur Rezirkulation zu der Gebläseeinrichtung abgezogen wird, und einen dritten Leitungsabschnitt (18a) umfaßt, der derart ausgelegt ist, daß Luft von außen angesaugt wird, um Kühlluft mittels der Gebläseeinrichtung zu dem Gehäuse zu lenken, sowie eine Einrichtung (18a, 18b) umfaßt, mittels welcher die Gebläseeinrichtung wahlweise mit einer der zweiten und dritten Leitungseinrichtungen verbindbar ist.

2. Maschine nach Anspruch 1, bei der die vordere Basiswand (31) in der Nähe des Basisteils schwenkbeweglich um eine horizontale Achse (33) angeordnet ist.

3. Maschine nach Anspruch 1 oder 2, welche eine Einrichtung (18a, 18b) enthält, die auf die Bewegung des Abdeckteils (10) in eine Offenstellung derselben anspricht, wobei die Ansprecheinrichtung derart beschaffen und ausgelegt ist, daß die Wähleinrichtng derart betätigt wird, daß die dritte Leitungseinrichtung gewählt wird, um Kühlluft in das Basisteil zu lenken.

4. Maschine nach Anspruch 1, 2 oder 3, bei der der erste Abschnitt (16) an dem Basisteil angebracht ist, um Luft in das Gehäuse über das Basisteil zu lenken, der zweite Abschnitt (18) an dem Abdeckteil (10) angebracht und von diesem getragen wird und die Bewegung des Abdeckteils von der Schließstellung zu einer Offenstellung automatisch den zweiten Abschnitt (18) von der Gebläseeinrichtung (14) abkoppelt, so daß die Rezirkulation der Luft über die Gebläseeinrichtung gestoppt wird und die Luftlenkung so gewählt wird, daß Kühlluft durch die Gebläseeinrichtung zu dem Gehäuse gelenkt wird.

5. Maschine nach einem der vorangehenden Ansprüche, bei der das Abdeckteil an der Basis derart angebracht ist, daß es eine Schwenkbewegung relativ zu diesem um eine horizontale Achse an der hinteren Basiswand ausführt.

6. Maschine nach einem der vorangehenden Ansprüche, bei der das Gehäuse einen U-förmigen Tragrahmen (106, 107) und eine Mehrzahl von mehrlagigen Platten (101, 102, 103) aufweist, die in dem U-förmigen Tragrahmen gehalten sind, die mehrlagigen Platten jeweils ein äußeres Metallblech (110) und ein inneres Metallblech (120) sowie eine Mehrzahl von Schichten (112, 114) aus Isoliermaterial aufweisen, die zwischen diesen zusammengedrückt sind, bei der das innere Metallblech (120) Biegungen zur Bildung von drei Seiten eines Rechtecks und eine nach außen weisende Biegung zum Ineinandergreifen mit einer benachbarten Platte aufweist, und bei der die Mehrzahl von Schichten aus Isoliermaterial ferner eine innere Schicht aus Hochtemperatur-Isoliermaterial aufweist, welches einer Temperatur von 649°C (1200°F) standhalten kann.

7. Maschine nach einem der vorangehenden Ansprüche, bei der die Einrichtung, welche das Tragteil lagert, einen Motorschlitten (52) aufweist, der außerhalb der Basisseitenwände und diesen benachbart angebracht ist und bei der der Motorschlitten eine Einrichtung zum Anbringen eines Antriebsmotors hat.

8. Maschine nach Anspruch 7, bei der der Motorschlitten ferner jeweils eine Plattform zum Tragen eines Paars von im Abstand liegenden Rollen (65, 66) aufweist, die derart ausgelegt sind, daß sie die Tragteil (32) drehbar lagern, und bei der die Plattform in der Nähe des oberen Rands der Basisseitenwand angeordnet ist.

9. Maschine nach einem der vorangehenden Ansprüche, welche eine Wassersprüheinrichtung (321) aufweist, die Wasser auf die Form während des dritten Schritts sprüht, und eine Wassersammelschale (323) an einer Basis des Gehäuses aufweist, die derart beschaffen und ausgelegt ist, daß wenigstens etwas von dem während des dritten Schritts ausgesprühten Wasser gesammelt wird, um es während des zweiten Schritts eines nächsten Zyklusses zu verdampfen.

10. Maschine nach einem der vorangehenden Ansprüche, bei der die Gebläseeinrichtung (14) Leitungseinrichtungen (18) enthält, die eine Verbindung mit einer Rezirkulationsöffnung (141) herstellen, die in Verbindung mit dem Innern des Gehäuses steht, um Luft von dem Gehäuse zur Rezirkulation in dem zweiten Schritt abzuziehen, eine Kühlöffnung in der Leitungseinrichtung in der Nähe des Gebläses (14) vorgesehen ist, welche ermöglicht, daß Kühlluft in das Gebläse von der Außenseite des Gehäuses her angesaugt wird, eine bewegliche Einrichtung (142) zum Öffnen und Schließen der Kühlöffnung vorgesehen ist, und bei der die Leitungseinrichtungen (18) derart ausgelegt sind, daß das Gebläse gedrosselt wird, und bei der die Kühlöffnung (147) eine größere Querschnittsfläche als die Leitungseinrichtungen (18) hat, um die Drosselung des Gebläses herabzusetzen und den Kühlluftstrom zu verstärken, und welche eine Einrichtung (143) zum automatischen Beaufschlagen einer Öffnung der Türeinrichtung aufweist, um die bewegliche Einrichtung so zu betreiben, daß Kühlluft eintreten kann.

11. Maschine nach einem der vorangehenden Ansprüche, bei der die Formtrageinrichtung aufweist

(a) ein Getriebegehäuse, das eine Eingangsantriebsradeinrichtung (214) und eine Ausgangsantriebsradeinrichtung (216) hat, um die Drehbewegung der Eingangsantriebsradeinrichtung orthogonal auf die Ausgangsantriebsradeinrichtung zu übertragen;

(b) eine zylindrische Welle (212), die längs einer Achse liegt und ein erstes Ende hat, das an dem Gebtriebegehäuse (213) angebracht ist, sowie eine Länge hat, die größer als etwa die Hälfte des Abstandes zwischen den Wänden der Rotationsformmaschine ist, und die ein zweites Ende hat, an dem eine Drehantriebseinrichtung (214) angebracht ist, um eine Rotationsantriebskopplung von einer Antriebsquelle aufzunehmen;

(c) ein hohles, zylindrisches Gehäuse (215), das längs der Achse liegt und ein erstes Ende hat, das an dem Getriebegehäuse (213) angebracht ist und eine Länge hat, die größer als etwa die Hälfte des Abstandes zwischen den Wänden der Rotationsformmaschine ist, wobei das zylindrische Gehäuse relativ zu dem Getriebegehäuse zu der zylindrischen Welle (212) gegenüberliegend angeordnet ist;

(d) eine Antriebswelle (218) in dem hohlen zylindrischen Gehäuse, welche ein erstes Ende hat, das mit der Eingangsantriebsradeinrichtung verbunden ist, und ein zweites Ende hat, das von dem zyindrischen Gehäuse vorsteht und eine Drehantriebseinrichtung (211) hat, die daran angebracht ist, um die Rotationsantriebskopplung von einer Antriebsquelle aufzunehmen;

(e) eine Antriebswelle (220), die mit der Ausgangsantriebsradeinrichtung verbunden ist und von dem Getriebegehäuse nach außen vorsteht; und

(f) eine Einrichtung (235) zur Begrenzung der Axialbewegung der zylindrischen Welle, des hohlen, zylindrischen Gehäuses und des Getriebegehäuses.

**Revendications**

1. Maschine de moulage par rotation destinée à être utilisée pour le moulage par rotation, du type assurant la réception et le traitement d'un moule dans une première étape dans laquelle le moule est chargé de matière plastique à mouler, dans une seconde étape dans laquelle le moule est entraîné en rotation alors qu'il est chauffé, dans une troisième étape dans laquelle le moule est entraîné en rotation pendant qu'il se refroidit, et dans une quatrième étape dans laquelle le moule est déchargé, la machine comprenant un boîtier fermé (10, 12) délimitant une chambre unique à l'intérieur, le boîtier ayant une base (12) comprenant un organe de base destiné à être en appui sur le sol de manière que le boîtier soit maintenu par l'organe de base en position fixe à la surface du sol, une paroi avant (31) de base, une paroi arrière de base et des parois latérales de base, chacune des parois de base étant fixée à l'organe de base afin qu'elle dépasse en direction générale verticale au-dessus de l'organe de base vers un bord supérieur de la paroi respective de base, un couvercle supérieur (10) comprenant une partie supérieure, une paroi avant de couvercle, une paroi arrière de couvercle et des parois latérales de couvercle, chacune des parois de couvercle dépassant de façon générale sous la partie supérieure vers un bord inférieur de la paroi respective de couvercle, le couvercle étant disposé de manière que les parois de base et les parois de couvercle se raccordent à leurs bords respectifs supérieur et inférieur et qu'une chambre interne unique soit délimitée pour le logement du moule, un organe (32) de support de moule destiné à supporter et entraîner le moule autour de deux axes orthogonaux, l'organe de support (32) étant destiné à être disposé d'une paroi latérale de base à l'autre paroi latérale de base, un dispositif de chauffage (26) destiné à introduire de la chaleur dans le boîtier à un emplacement qui se trouve à l'extérieur du moule, un ventilateur (14) et un conduit (16, 18, 18a) connecté au ventilateur et destiné à diriger de l'air dans la chambre, caractérisée en ce que la paroi avant de base comprend au moins une partie qui est montée sous forme articulée par rapport à l'organe de base afin qu'elle puisse se déplacer vers une position d'ouverture permettant l'accès d'un opérateur à la base, et vers une position de fermeture dans laquelle la base est totalement fermée, en ce que le couvercle supérieur (10) est monté afin qu'il soit mobile par rapport à la base et qu'il puisse être déplacé séparément par rapport à la paroi avant de base d'une position de fermeture dans laquelle la chambre interne unique est fermée à une position d'ouverture dans laquelle le couvercle est placé à distance des bords supérieurs de la paroi des base et permet l'accès vertical direct à la base, en ce qu'un dispositif (52) est destiné au montage de l'organe de support (32) de manière que l'organe de support soit disposé transversalement aux bords supérieurs des parois latérales de base, si bien que les bords inférieurs des parois latérales du couvercle peuvent recouvrir l'organe de support lorsque le couvercle est en position de fermeture, et en ce que le conduit (16, 18, 18a) comporte une première partie de conduit (16) destinée à diriger l'air du ventilateur (14) dans le boîtier, une seconde partie de conduit (18) destinée à aspirer l'air du boîtier afin qu'il recircule vers le ventilateur, une troisième partie de conduit (18a) destinée à aspirer l'air exterieur et à diriger l'air de refroidissement par l'intermédiaire du ventilateur vers le boîtier, et un dispositif (18a, 18b) destiné à sélectionner la connexion au ventilateur de l'un des second et troisième conduits.

2. Maschine selon la revendication 1, dans laquelle la paroi avant de base (31) peut pivoter autour d'un axe horizontal (33) près de l'organe de base.

3 Machine selon la revendication 1 ou 2, comprenant un dispositif (18a, 18b) commandé par le déplacement du couvercle (10) vers sa position d'ouverture le dispositif commandé étant destiné à manoeuvrer le dispositif de sélection afin que le troisième conduit soit sélectionné et dirige l'air de refroidissement dans l'organe de base.

4. Machine selon la revendication 1, 2 ou 3, dans laquelle la première partie (16) est fixée à l'organe de base afin qu'elle dirige l'air dans le boîtier par l'intermédiaire de l'organe de base, et dans laquelle la seconde partie (18) est fixée au couvercle (10) et est portée par celui-ci, le déplacement du couvercle de sa position de fermeture vers sa position d'ouverture déconnectant automatiquement la seconde partie (18) du ventilateur (14) afin que la recirculation de l'air par l'intermédiaire du ventilateur soit interrompue et que la direction d'air de refroidissement par l'intremédiaire du ventilateur et vers le boîtier soit sélectionnée.

5. Machine selon l'une quelconque des revendications précédentes, dans laquelle le couvercle est monté sur l'organe de base afin qu'il puisse pivoter par rapport à celui-ci autour d'un axe horizontal placé au niveau de la paroi arrière de base.

6. Machine selon l'une quelconque des revendications précédentes, dans laquelle le boîtier comporte un bâti de support (106, 107) à organes en U et plusieurs panneaux multicouches (101, 102, 103) maintenus dans le châssis de support à organes en U, les panneaux multicouches comportent chacun une feuille métallique externe (110) et une feuille métallique interne (120) et plusieurs couches (112, 114) d'un matériau isolant comprimé entre elles, la feuille métallique interne (120) ayant des coudes afin qu'elle forme trois côtés d'un rectangle et un coude vers l'extérieur assurant l'emboîtement par rapport à un panneau adjacent, et dans laquelle les couches de matière d'isolation comportent en outre une couche interne d'une matière d'isolation résistant à des températures élevées, capable de résister à une température de 649°C (1200°F).

7. Machine selon l'une quelconque des revendications précédentes, dans laquelle le dispositif de montage de l'organe de support comprend un chariot (52) de support de moteur monté à l'extérieur des parois latérales de l'organe de base et près de ces parois, le chariot de support de moteur comprenant un dispositif assurant le montage d'un moteur.

8. Machine selon la revendication 7, dans laquelle le chariot de support de moteur comporte en outre une plate-forme destinée à supporter deux galets distants (65, 66) qui sont destinés eux-mêmes à supporter l'organe de support (32) en permettant sa rotation, la plate-forme étant placée approximativement au bord supérieur de la paroi latérale de base.

9. Machine selon l'une quelconque des revendications précédentes, comprenant un dispositif (321) de pulvérisation d'eau sur le moule au cours de la troisième étape, et une cuve (323) collectrice d'eau, placée à la base du boîtier et destinée à collecter une partie au moins de l'eau pulvérisée pendant la troisième étape afin que l'eau s'évapore au cours de la seconde étape d'un cycle suivant.

10. Machine selon l'une quelconque des revendications précédentes, dans laquelle le ventilateur (14) comporte un conduit (18) communiquant avec une ouverture (141) de recirculation qui communique elle-même avec l'intérieur du boîtier afin que l'air soit aspiré du boîtier et recircule dans la seconde étape, une ouverture de refroidissement formée dans le conduit près du ventilateur (14) étant destinée à permettre l'entrée d'air froid dans le ventilateur depuis l'extérieur du boîtier, et un dispositif mobile (142) destiné à ouvrir et fermer l'ouverture de refroidissement, et dans laquelle le conduit (18) est destiné à former un étranglement pour le ventilateur, et l'ouverture de refroidissement (147) a une section supérieure à celle du conduit (18) afin que l'étranglement soit réduit et que le débit d'air froid augmente, la machine comprenant aussi un dispositif (143) destiné à être commandé automatiquement lors de l'ouverture de la porte et destiné à manoeuvrer le dispositif mobile afin qu'il permettre l'entrée d'air froid.

11. Machine selon l'une quelconque des revendications précédentes, dans laquelle l'organe de support de moule comprend

(a) un boîtier de transmission ayant un dispositif (214) d'entraînement d'entrée et un dispositif (216) d'entraînement de sortie à pignon, destiné à transmettre perpendiculairement le mouvement de rotation du dispositif d'entraînement d'entrée au dispositif d'entraînement de sortie,

(b) un arbre cylindrique (212) placé suivant un axe et ayant une première extrémité fixée au boîtier (213) et ayant une longueur supérieur à la moitié environ de la distance comprise entre les parois de la machine de moulage par rotation, et une seconde extrémité munie d'un dispositif d'entraînement en rotation (214) qui lui est fixé et qui est destiné à être accouplé à une source motrice afin qu'il soit entraîne en rotation.

(c) un boîtier cylindrique creux (215) placé le long de l'axe et ayant une première extrémité fixée au boîtier (213) et une longueur supérieure à la moitié environ de la distance comprise entre les parois de la machine de moulage par rotation, le boîtier cylindrique ayant une position opposée à celle de l'arbre cylindrique (212) par rapport au boîtier de transmission,

(d) un arbre d'entraînement (218) placé dans le boîtier cylindrique creux et ayant une première extrémité raccordée au dispositif d'entraînement d'entrée et une seconde extrémité dépassant du boîtier cylindrique et ayant un dispositif d'entraînement en rotation (211) qui lui est fixé afin qu'il reçoive de l'énergie d'entraînement en rotation d'une source motrice,

(e) un arbre mené (220) raccordé au dispositif d'entraînement de sortie et dépassant à l'extérieur du boîtier de transmission, et

(f) un dispositif (235) destiné à limiter le déplacement axial de l'arbre cylindrique, du boîtier cylindrique creux et du boîtier de transmission.

FIG. I

FIG. 2

FIG. 3

FIG. 4

2

FIG. 9

FIG. 5

**FIG. 6**

**FIG. 7**

**FIG. 8**

FIG. IO

FIG. 11

FIG. 12